# EUROPÄISCHE PATENTANMELDUNG

(11) **EP 0 955 782 A2**
(43) Veröffentlichungstag der Anmeldung: **10.11.1999**
(21) Anmeldenummer: 99250142.9
(22) Anmeldetag: 29.04.1999
(51) Int. Cl.: H04Q 7/38

(54) **Verfahren und Vorrichtung zum Aufbau einer Sprachverbindung mit Benutzertypabhängiger Qualität in einem Mobilkommunikationssystem**

(30) Priorität: 06.05.1998 DE 19821111
(71) Anmelder: MANNESMANN Aktiengesellschaft, 40213 Düsseldorf (DE)
(72) Erfinder: Bösinger, Michael Dipl.-Ing., 41352 Korschenbroich (DE); Leifeld, Christoph, Dipl.-Ing., 40476 Düsseldorf (DE)
(74) Vertreter: Meissner, Peter E., Dipl.-Ing.

(57) **Zusammenfassung**

Durch ein Verfahren zum Aufbau einer Sprachverbindung (12) zwischen einem anrufenden Telekommunikationsteilnehmer (A;7) und einem angerufenen Telekommunikationsteilnehmer (D;D) durch eine Mobilfunk-Vermittlungszentrale (MSC 1; 1,2), von welcher (1; 1,2) wahlweise Sprachverbindungen (12; 12,15) mit einer niedrigen (12) oder einer hohen (12,15) Übertragungsqualität schaltbar (1; 1,2) sind,
- wobei eine Sprachverbindung (12) mit der niedrigen Übertragungsqualität zwischen einem Telekommunikationsteilnehmer (A) und einer mit der Mobilfunkvermittlungszentrale (1) verbundenen Mobilfunkbasisstation (BSC 32, BTS 8) geschaltet wird, wenn höchstens einer (A) der beiden Telekommunikationsteilnehmer (A, 7) ein Mobilfunkteilnehmer ist,
- während eine Sprachverbindung (12,15) mit der hohen Übertragungsqualität zwischen einer Mobilstation (A bzw. D) und der zugeordneten Basisstation (BSC 32, BTS 8 bzw. BSC 14, BTS 11) gewählt wird, wenn beide Telekommunikationsteilnehmer (A, D) Mobilfunkteilnehmer sind.
und eine Mobilfunkvermittlungszentrale wird bei stets hinreichender Übertragungsqualität eine Optimierung der Übertragungskosten erzielt.

## Beschreibung

Die Erfindung betrifft ein Verfahren zum Aufbau einer Sprachverbindung und eine Vorrichtung zum Durchführen des Verfahrens.

Eine Sprachverbindung zwischen einem anrufenden und einem angerufenen Telekommunikationsteilnehmer kann in unterschiedlicher Übertragungsqualität, insbesondere mit unterschiedlicher Übertragungsrate aufgebaut werden. Von der Übertragungsrate der Sprachverbindung hängt die Qualität der Übermittlung ab. Die Höhe der Übertragungskosten ist von der Übertragungsrate abhängig.

Aufgabe der vorliegenden Erfindung ist eine Optimierung der Übertragungskosten bei Gewährleistung einer zumindest akzeptablen Verbindungsqualität bei allen Sprachverbindungen zwischen Telekommunikationsteilnehmern. Die Aufgabe wird durch die Gegenstände der unabhängigen Ansprüche gelöst.

Die Erfindung gewährleistet eine hinreichende Übertragungsqualität bei allen möglichen Anrufer/Angerufener-Konstellationen. Hinsichtlich der Übertragungsqualität ist die Konstellation eines mobilen Anrufers und eines mobilen Angerufenen, also eines Mobilfunk-Tandems, am kritischsten, weil durch die zweimalige Funkübertragung (vom Anrufer zu einer Basisstation und von einer Basisstation zum Angerufenen) Qualitätsverluste entstehen; deshalb wird erfindungsgemäß bei Auftreten eines Mobilfunk-Tandems eine Sprachverbindung auf der Mobilfunkstrecke mit hoher Übertragungsqualität gewählt. Im Falle eines Anrufs eines anrufenden Mobiltelefons (= Mobilstation = MS = Handy) bei einem angerufenen Festnetzteilnehmer (oder analog umgekehrt) in einem Festnetz (= PSTN = public service telephone) erfolgt lediglich eine einzige Funkübertragung, nämlich zwischen der anrufenden (oder analog einer angerufenen Mobilstation) und der zugeordneten Basisstation; deshalb wird bei dieser Konstellation eine niedrige Übertragungsrate für eine Mobilfunkstrecke zwischen anrufendem und angerufenem Telekommunikationsteilnehmer gewählt, was für eine hinreichende Übertragungsqualität ausreicht.

Besonders vorteilhafte Ausgestaltungen der Erfindung ergeben sich aus den Unteransprüchen. Weitere Merkmale und Vorteile der Erfindung ergeben sich aus der nachfolgenden Beschreibung eines Ausführungsbeispiels anhand der Zeichnung. Dabei zeigt:

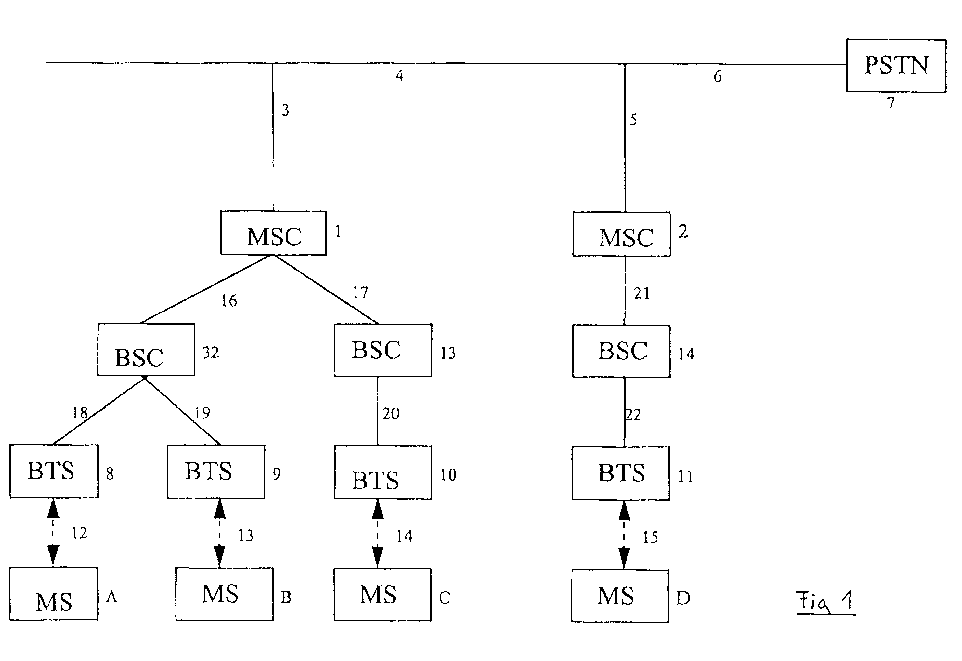

- Fig. 1: schematisch einen Ausschnitt aus einem Mobilfunknetz.

Figur 1 zeigt zwei Vermittlungszentralen für Mobilfunk 1, 2 (auch bezeichnet als mobile switching centre = MSC) welche über die Festnetzstrecken 3, 4, 5 miteinander sowie über die Festnetzstrecken 3, 4, 6 bzw. 5, 6 mit einem Festnetz 7 (= PSTN) eines Netzbetreibers verbindbar sind.

Ferner zeigt Figur 1 Mobilstationen A, B, C, D (auch bezeichnet als mobile station = MS oder als Handies). Eine Mobilstation A kann über eine räumlich nahegelegene Basis- Sende- und Empfangsstation 8 ,9 , 10 oder 11 (auch bezeichnet als base transceiver station = BTS (hier über die BTS 8 und eine Basis-Stationssteuerung 32, 13 oder 14 (auch bezeichnet als base station controller = BSC) hier über die der BTS 8 zugeordnete BSC 12, mit einer MSC (hier der MSC 1) verbunden werden. Die gestrichelte Verbindung 12 zwischen der Mobilstation A und der von ihr derzeit benutzten BTS 8 ist eine Mobilfunkstrecke ebenso wie die Verbindungen 13, 14, 15 zwischen B und 9, C und 10, D und 11. Auf den Funkstrecken zwischen einer Mobilstation A und einer BTS 8 entstehen wesentlich höhere Übertragungsqualitätsverluste als auf Festnetzstrecken 3 - 6, 16- 22.

Die Übertragungsverluste zwischen einem anrufenden Telekommunikationsteilnehmer und einem angerufenen Telekommunikationsteilnehmer kummulieren sich entlang des Übertragungsweges. Bei einem Anruf von einem Mobilfunkteilnehmer A zu einem weiteren Mobilfunkteilnehmer C treten zweimal Übertragungsverluste auf einer Funkstrecke 12, 14 auf, welche jeweils relativ hoch sind.

Deshalb wird bei einem Anruf der Mobilstation A bei der Mobilstation C sowohl der Mobilstation A bei ihrer Funk-Übertragung zur BTS 8 über die Funkstrecke 12 wie auch der Mobilstation C bei ihrer Funkübertragung zur BTS 10 über die Funkstrecke 14 ein Mobilfunk-Sprachkanal mit hoher Übertragungsrate zugewiesen.

Ebenso weist z.B. die MSC 1 bei einem Anruf der Mobilstation A bei der Mobilstation B sowohl der Mobilstation A für die Übertragung über den Funkkanal 12 zur BTS 8 wie auch der Mobilstation B für die Übertragung über den Funkkanal 13 zur BTS 9 jeweils einen Sprachkanal mit hoher Übertragungsrate zu.

Bei einem Anruf der Mobilstation A bei der Mobilstation D weist die MSC 1 der Mobilstation A für die Kommunikation über die Funkstrecke 12 einen Sprachkanal mit hoher Übertragungsqualität zu und die MSC 2 weist der Mobilstation D für die Übertragung über den Funkkanal 15 einen Sprachkanal mit hoher Übertragungsqualität zu.

Bei einem Anruf der Mobilstation A bei einem Teilnehmer im Telefonfestnetz (PSTN 7) eines Netzbetreibers erfolgt lediglich eine Kommunkation über eine störungsanfällige Funkstrecke 12 zwischen der Mobilstation A und der BTS 8, so daß eine Übertragung über einen Sprachkanal 12 mit niedriger Übertragungsrate (unter Berücksichtung der Übertragungsverluste durch die Funkverbindung 12) zu insgesamt hinreichender Qualität zwischen dem anrufenden und dem angerufenen Telekommunikationsteilnehmer führt.

Die Sprachverbindung, deren Übertragungsqualität hoch oder niedrig gewählt werden soll, ist also jeweils mindestens eine Funkstrecke zwischen einer Mobilstation A und einer Sende-Empfangsstation (= BTS) 8 eines Mobilfunknetzes.

Die niedrigere Übertragungsqualität in Form einer niedrigeren Übertragungsrate über den Sprachkanal 12 kann z.B. dadurch entstehen, daß bei einem Zeitmultiplex-Übertragungsverfahren nur jeder zweite Zeitschlitz verwendet wird. Bei einem Kodierungs-Übertragungsverfahren (wie WCDMA, TD-WCDMA etc.) kann alternativ oder zusätzlich eine Wahl der Übertragungsqualität durch entsprechende Wahl der Kodierungsparameter eingestellt werden.

Im vorliegenden Falle ist eine hohe Übertragungsqualität ein GSM-full-rate-Kanal. Dieser weist hier 13 kB pro Sekunde an Übertragungsrate auf.

Hingegen ist ein Sprachkanal mit niedriger Übertragungsrate hier ein GSM-halfrate-Kanal und weist eine Übertragungsrate von 6,5 kB pro Sekunde für die Sprachübertragung auf.

Eine MSC 1 veranlaßt hier bei Anrufen einer über ihr zugeordnete Basisstationen (BSC 32, 13) anrufenden Mobilstationen, also bei mobile originated call (= MOC) für die sie anrufende Mobilstation A und zugeordnete BTS 8 der zugeordneten Funkstrecke 12 die hohe bzw. niedrige Übertragungsrate. Die MSC 1 weist auch bei (hier über das Festnetz 3, 4, 5 bzw. 3, 4, 6) über sie zu einer Mobilstation A weiterzuleitenden Anrufen der Funkübertragung 12 zwischen der Mobilstation und der BTS 8 eine hohe bzw. niedrige Übertragungsrate zu (welcher Fall als mobile terminated call bezeichnet wird, also ein bei einer Mobilstation als angerufenem Telekommunikationsteilnehmer ankommender Anruf).

Im vorliegenden Beispiel entscheidet eine MSC 1 bzw. 2 jeweils unabhängig für die über ihr zugeordnete Basisstationen 8, 9, 10 bzw. Basisstationen-Steuerungen BSC 32, 13 anrufende bzw. angerufenen Mobilstationen A, B, C für MSC 1 bzw. D für MSC 2 eigenständig über die Zuweisung eines Sprachkanals mit hoher oder niedriger Übertragungsqualität zu einer Funkstrecke 12, 13, 14 der Basisstationen. Bei einem Anruf von A nach D entscheidet also die MSC 1 über die Funkstrecke 12, und die MSC 2 entscheidet über die Funkstrecke 15. Die entscheidende MSC benachrichtigt jeweils die mit einer MS A zu verbindende BSC 32 bzw. BTS 8 über die einzurichtende Übertragungsqualität.

Die Erkennung einer Mobilstation kann aufgrund einer beliebigen für eine Mobilstations-Kommunikation kennzeichnenden Nummer erfolgen. Insbesondere kann hierzu eine Telefonnummer einer Mobilstation verwendet werden. Wenn der anrufende Telekommunikationsteilnehmer eine Mobilstation ist, kann auch ohne Überprüfung ihrer Nummer allein aufgrund der Tatsache, daß die Mobilstation bei einer Basisstation anruft, festgestellt werden, daß sie eine Mobilstation ist.

Die MSC kann aufgrund einer Kennung beim Adreßaufbau oder anderer im MSC ausgelösten Aktionen eine Mobilstation als anrufenden bzw. angerufenen Telekommunikationsteilnehmer identifizieren.

Bei einer Mobilstation als Anrufer (= MOC) wird die setup message, also die beim Verbindungsaufbau übermittelte Nachricht, dahingehend geprüft, ob ein Mobilfunk-Mobilfunkanruf (= Tandemanruf) getätigt wird.

Bei einem in einer MSC 1 eingehenden Anruf, welcher für eine zugeordnete Mobilstation A als angerufenen Telekommunikationsteilnehmer bestimmt ist, steht fest, daß dieser eine Mobilstation ist, und es wird geprüft, ob auch der anrufende Telekommunikationsteilnehmer eine Mobilstation ist; hierfür wird beispielsweise hier eine IAM (initial adress message, TUP/ISUP) überprüft.

In einem MSC kann vorgegeben sein, ob oder unter welchen Voraussetzungen im Falle eines Anrufs zwischen einem Mobilfunkteilnehmer und einem Telekommunikationsteilnehmer in einem Festnetz (PSTN7) welche Übertragungsrate gewählt werden soll; diese kann vom Netzbetreiber des PSTN7 vorgegeben und evtl. auch änderbar sein.

## Patentansprüche

1. Verfahren zum Aufbau einer Sprachverbindung (12) zwischen einem anrufenden Telekommunikationsteilnehmer (A;7) und einem angerufenen Telekommunikationsteilnehmer (D;D) durch eine Mobilfunk-Vermittlungszentrale (MSC 1; 1,2), von welcher (1; 1,2) wahlweise Sprachverbindungen (12; 12,15) mit einer niedrigen (12) oder einer hohen (12,15) Übertragungsqualität schaltbar (1; 1,2) sind,
- wobei eine Sprachverbindung (12) mit der niedrigen Übertragungsqualität zwischen einem Telekommunikationsteilnehmer (A) und einer mit der Mobilfunkvermittlungszentrale (1) verbundenen Mobilfunkbasisstation (BSC 32, BTS 8) geschaltet wird, wenn höchstens einer (A) der beiden Telekommunikationsteilnehmer (A, 7) ein Mobilfunkteilnehmer ist,
- während eine Sprachverbindung (12,15) mit der hohen Übertragungsqualität zwischen einer Mobilstation (A bzw. D) und der zugeordneten Basisstation (BSC 32, BTS 8 bzw. BSC 14, BTS 11) gewählt wird, wenn beide Telekommunikationsteilnehmer (A, D) Mobilfunkteilnehmer sind.

2. Verfahren nach Anspruch 1,
dadurch gekennzeichnet,
daß in einer Mobilfunkvermittlungszentrale (MSC 1) über die hohe oder niedrige Übertragungsqualität der Sprachverbindung auf einer Funkstrecke zwischen einer Mobilfunkstation eines Telekommunikationsteilnehmers (A) und einer zugeordneten Basisstation (BSC 32, BTS 8) entschieden wird und diese Entscheidung der Basisstation (BSC 32, BTS 8) zum Funkverbindungsaufbau mit der Mobilstation (A) übermittelt wird.

3. Verfahren nach einem der vorhergehenden Ansprüche,
dadurch gekennzeichnet,
daß die Sprachverbindung, deren niedrige oder hohe Übertragungsqualität geschaltet wird, eine Mobilfunkstrecke entlang des Übertragungskanals zwischen den Telekommunkationsteilnehmern ist.

4. Verfahren nach einem der vorhergehenden Ansprüche,
dadurch gekennzeichnet,
daß eine Sprachverbindung mit hoher Übertragungsqualität eine Sprachverbindung mit hoher Übertragungsrate, insbesondere mit 13 kB/sec ist.

5. Verfahren nach einem der vorhergehenden Ansprüche,
dadurch gekennzeichnet,
daß eine Sprachverbindung mit niedriger Übertragungsqualität eine Sprachverbindung mit niedriger Übertragungsrate, insbesondere mit 6,5 kB/sec ist.

6. Verfahren nach einem der vorhergehenden Ansprüche,
dadurch gekennzeichnet,
daß die niedrige Übertragungsqualität (half rate) die halbe Übertragungsrate wie die hohe Übertragungsqualität (full rate) aufweist.

7. Verfahren nach einem der vorhergehenden Ansprüche,
dadurch gekennzeichnet,
daß die Sprachverbindung eine digitale Sprachverbindung ist.

8. Verfahren nach einem der vorhergehenden Ansprüche,
dadurch gekennzeichnet,
daß die Mobilfunkvermittlungszentrale, die Basisstation und die Mobilstation gemäß dem GSM-Standard betrieben werden.

9. Verfahren nach einem der vorhergehenden Ansprüche,
dadurch gekennzeichnet,
daß die Überprüfung, ob der anrufende Telekommunikationsteilnehmer (A) ein Mobilfunkteilnehmer ist, aufgrund seiner beim Verbindungsaufbau übermittelten Nummer erfolgt.

10. Verfahren nach einem der vorhergehenden Ansprüche,
dadurch gekennzeichnet,
daß die Überprüfung, ob der angerufene Telekommunkationsteilnehmer ein Mobilfunkteilnehmer ist aufgrund einer beim Verbindungsaufbau übermittelten Nummer erfolgt.

11. Verfahren nach einem der vorhergehenden Ansprüche,
dadurch gekennzeichnet,
daß ein Parameter der hohen Übertragungsqualität, insbesondere die hohe Übertragungsrate, von einem Netzbetreiber eines Festnetzer vorgebbar und änderbar ist.

12. Mobilfunkvermittlungszentrale (MSC 1) zur Durchführung des Verfahrens nach einem der vorhergehenden Ansprüche.

13. Mobilfunkvermittlungszentrale nach Anspruch 12,
dadurch gekennzeichnet,
daß sie
- eine Einrichtung zum Feststellen, ob der anrufende Telekommunikationsteilnehmer ein Mobilfunkteilnehmer ist,
- eine Einrichtung zum Feststellen, ob der angerufene Telekommunikationsteilnehmer ein Mobilfunkteilnehmer ist,
- eine Einrichtung zum Entscheiden über hohe oder niedrige Übertragungsqualität auf einer von ihr (1) betreibbaren Mobilfunkstrecke (12)
- eine Einrichtung zum Aufbau einer Sprachverbindung mit entweder hoher oder niedriger Übertragungsqualität aufweist.
